# EUROPÄISCHE PATENTANMELDUNG

(11) **EP 2 789 872 A2**
(43) Veröffentlichungstag der Anmeldung: **15.10.2014**
(21) Anmeldenummer: 14163474.1
(22) Anmeldetag: 03.04.2014
(51) Int. Cl.: F16F 7/10

(54) **Tilgereinrichtung für ein schwingungsfähiges Gebilde**

(30) Priorität: 03.04.2013 DE 102013103337
(71) Anmelder: Industrial Science GmbH powered by IAV, 64283 Darmstadt (DE)
(72) Erfinder: Corneli, Tobias, 56288 Kastellaun (DE); Thurner, Joachim, 64297 Darmstadt (DE); Pelz, Peter, Prof., 64285 Darmstadt (DE)
(74) Vertreter: Katscher Habermann Patentanwälte

(57) **Zusammenfassung**

Eine Tilgereinrichtung (1) für ein schwingungsfähiges Gebilde (16), das mit einem quasistatischen Basiselement (15) verbunden ist, weist eine Tilgermasse (21) auf, wobei die Tilgermasse (21) an dem Basiselement (15) in einer Schwingungsrichtung verlagerbar gelagert ist und an einem Ankopplungsbereich des Gebildes (16) beabstandet von dem Basiselement (15) elastisch mit dem schwingungsfähigen Gebilde (16) in Wirkverbindung steht. Die Tilgermasse (21) kann über ein stabförmiges Kopplungselement über den Ankopplungsbereichen mit dem Gebilde (16) in Wirkverbindung stehen. Das Kopplungselement kann einen starren Kopplungselementkörper aufweisen, der schwenkbar an dem Gebilde gelagert und entgegen einer Rückstellkraft in Schwingungsrichtung auslenkbar ist. Es ist ebenfalls vorgesehen, dass ein federnd gelagertes Rad (16) das schwingungsfähige Gebilde ist und dass ein Fahrzeugchassis (15) das Basiselement ist, an dem ein Fluidbehälter (17) mit einem Fluid (21) als Tilgermasse gelagert ist. Der Fluidbehälter (18) ist an oder in einer Dämpfereinrichtung (14) angeordnet, mit der Schwingungsbewegungen des federnd gelagerten Rads (16) gedämpft werden.

## Beschreibung

Die Erfindung betrifft eine Tilgereinrichtung für ein schwingungsfähiges Gebilde, das mit einem quasistatischen Basiselement verbunden ist, wobei eine Tilgermasse an einem Ankopplungsbereich des Gebildes beabstandet von dem Basiselement elastisch mit dem schwingungsfähigen Gebilde in Wirkverbindung steht.

Die aus der Praxis bekannten Tilgereinrichtungen weisen üblicherweise eine Tilgermasse auf, die elastisch an ein schwingungsfähiges Gebilde angekoppelt ist. Wenn das schwingungsfähige Gebilde zu Schwingungen angeregt wird, wird die Tilgermasse durch die Schwingungen des Gebildes ausgelenkt und folgt auf Grund der elastischen Kopplung den Bewegungen des schwingenden Gebildes mit einer gewissen Verzögerung. Die elastische Wirkverbindung, welche die Schwingungen der Tilgermasse verursacht, und die Erzeugung von Schwingungen der Tilgermasse verbrauchen Schwingungsenergie, die den Schwingungen des Gebildes entzogen wird. Der Energieverbrauch, der Schwingungsenergie des schwingungsfähigen Gebildes in Wärmeenergie und in Schwingungsenergie der Tilgermasse umwandelt, bewirkt demzufolge eine Reduzierung der Schwingungen des Gebildes.

Die Tilgermasse, die elastisch an dem schwingungsfähigen Gebilde angekoppelt ist, weist eine Eigenfrequenz auf, die durch die träge Masse der Tilgermasse und durch die elastische Wirkverbindung bzw. Ankopplung an das schwingungsfähige Gebilde vorgegeben wird. Durch eine geeignete Vorgabe der Eigenfrequenz der Tilgereinrichtung und deren Anpassung an die Schwingungen des schwingenden Gebildes kann erreicht werden, dass Schwingungen des Gebildes, die in einem bestimmten Verhältnis zu der Eigenfrequenz der Tilgereinrichtung stehen, besonders effektiv reduziert bzw. unterdrückt werden. Auf diese Weise kann mit einer geeignet dimensionierten Tilgereinrichtung ein gefährliches Aufschaukeln von Schwingungen einer Resonanzfrequenz des schwingungsfähigen Gebildes reduziert oder weitgehend unterbunden werden.

Tilgereinrichtungen werden beispielsweise bei Gebäuden oder Bauwerken eingesetzt, um die von Wind, aber auch von Erdbeben oder durch Benutzung erzeugten Bauwerksschwingungen zu reduzieren. Würde das Bauwerk ohne eine geeignete Tilgereinrichtung in Schwingungen versetzt werden, könnten sich Schwingungen im Bereich einer Resonanzfrequenz gefährlich aufschaukeln und zu einer Beschädigung oder sogar zu einer Zerstörung des Bauwerks führen.

Es ist ebenfalls aus der Praxis bekannt, Schwingungen eines schwingungsfähigen Maschinenelements relativ zu einem ortsfesten Maschinenfundament mit einer geeignet abgestimmten Tilgereinrichtung zu reduzieren. So können beispielsweise die während des Betriebs in einer Maschine angeregten Schwingungen reduziert und unerwünschte Vibrationen oder Geräuschbildung vermindert oder weitgehend unterbunden werden.

Insbesondere bei Kraftfahrzeugen werden Tilgereinrichtungen dazu verwendet, um unerwünschte Schwingungen zu verringern, die beispielsweise während der Fahrt von den federnd gelagerten Rädern erzeugt werden. Das Fahrzeugchassis kann dabei als quasistatisches Basiselement angesehen werden. Ein federnd gelagertes Rad stellt dann ein schwingungsfähiges Gebilde dar, das während der Fahrt Schwingungen relativ zu dem Fahrzeugchassis ausführt.

Die aus der Praxis bekannten Tilgereinrichtungen weisen eine elastisch an dem schwingungsfähigen Gebilde angekoppelte Tilgermasse auf, die ihrerseits schwingungsfähig an dem Gebilde gelagert ist. Erzwungene Schwingungen des Gebildes werden auf die Tilgermasse übertragen und versetzen die Tilgermasse in Schwingungen, so dass dem schwingenden Gebilde Schwingungsenergie entzogen und auf die relativ zu dem Gebilde schwingende Tilgermasse übertragen wird. Auf diese Weise können Schwingungen des schwingungsfähigen Gebildes reduziert werden, ohne die Schwingungsenergie dissipativ zu entziehen.

Oftmals sind zusätzliche Dämpfereinrichtungen vorgesehen, die zwischen dem schwingungsfähigen System und der Tilgereinrichtung angebracht sind. Die Dämpfereinrichtungen wandeln Schwingungsenergie in andere Energieformen wie beispielsweise Wärme um, die an die Umgebung abgegeben werden kann.

Das Basiselement kann seinerseits beweglich relativ zu einem ortsfesten Inertialsystem angeordnet sein und wird im Vergleich mit dem schwingungsfähigen Gebilde als quasistatisch angesehen und bezeichnet, falls die Schwingungsbewegungen des Basiselements nicht mit den Schwingungen des schwingungsfähigen Gebildes übereinstimmen, sondern deutlich von den Schwingungen des schwingungsfähigen Gebildes abweichen und diese nicht merklich beeinflussen.

Eine aus der Praxis bekannte Tilgereinrichtung für ein Gebäude kann beispielsweise ein Tilgerpendel sein, das in einem oberen Bereich des Gebäudes angekoppelt ist und Gebäudeschwingungen entgegenwirkt. Das Gebäude stellt in diesem Zusammenhang das schwingungsfähige Gebilde dar, das mit dem als quasistatisch angesehenen Untergrund verbunden ist.

Eine Tilgereinrichtung, mit der Wind erzeugte Schwingungen eines Hochhauses reduziert werden sollen, erfordert oftmals die Anordnung einer großen Tilgermasse von mehreren Tonnen in einem oberen Bereich des Hochhauses, wodurch zusätzliche Kosten und eine eingeschränkte Nutzungsmöglichkeit der oftmals besonders begehrten Nutzfläche in dem oberen Bereich des Hochhauses entstehen.

Es wird deshalb als eine Aufgabe der vorliegenden Erfindung angesehen, eine Tilgereinrichtung der eingangs genannten Gattung so auszugestalten, dass mit möglichst geringem konstruktivem Aufwand eine möglichst effektive Schwingungstilgung für verschiedene schwingungsfähige Gebilde möglich ist.

Diese Aufgabe wird erfindungsgemäß dadurch gelöst, dass die Tilgermasse an dem Basiselement in einer

Schwingungsrichtung verlagerbar gelagert ist. Die Anordnung der Tilgermasse an dem quasistatischen Basiselement widerspricht der aus dem Stand der Technik bekannten Vorstellung einer Tilgereinrichtung, bei der die Tilgermasse ausschließlich mit dem schwingungsfähigen Gebilde verbunden ist und von diesem zu Schwingungen angeregt werden kann. Es hat sich jedoch gezeigt, dass die Anordnung der Tilgermasse an dem Basiselement erhebliche Vorteile eröffnet. An dem Basiselement steht oftmals mehr Raum für die Anordnung der Tilgermasse zur Verfügung. Für die Lagerung der Tilgermasse müssen an dem Basiselement üblicherweise weniger aufwändige und damit deutlich kostengünstigere Maßnahmen als für die Lagerung der Tilgermasse an dem schwingungsfähigen Gebilde vorgesehen werden. Das Gewicht des schwingungsfähigen Gebildes wird durch die an dem Basiselement gelagerte Tilgermasse nicht unnötig vergrößert.

Über die elastische bzw. weiche Wirkverbindung können Schwingungen des schwingungsfähigen Gebildes auf die Tilgermasse übertragen werden, um die Tilgermasse in der vorgesehenen Schwingungsrichtung zu verlagern und zu Schwingungen anzuregen. Die in Schwingungsrichtung schwingende Tilgermasse bildet mit dem schwingenden Gebilde ein gekoppeltes System und entzieht dem schwingenden Gebilde in Schwingungsrichtung Schwingungsenergie.

Die Wirkverbindung zwischen dem schwingungsfähigen Gebilde und der Tilgermasse an dem Basiselement ist dabei zweckmäßigerweise so ausgestaltet und ausgelegt, dass ganz überwiegend oder ausschließlich Schwingungsenergie von dem schwingenden Gebilde auf die Tilgermasse übertragen wird und darüber hinaus keine Kräfte oder Momente von dem schwingungsfähigen Gebilde auf die Tilgermasse übertragen werden. Die elastische Wirkverbindung ist zweckmäßigerweise so ausgestaltet, dass ausschließlich in Schwingungsrichtung Kräfte oder Momente übertragen werden können und senkrecht zu dieser Schwingungsrichtung keine nennenswerte Kraftübertragung möglich ist.

Ein wesentlicher Unterschied der erfindungsgemäßen Tilgereinrichtung zu bereits bekannten hydraulischen Lagern besteht darin, dass hydraulische Lager die dynamischen Wechselkräfte reduzieren, d.h. der Isolation dienen, wohingegen die erfindungsgemäße Tilgereinrichtung eine Reduktion der Bewegungsamplitude bzw. Schwingungsamplitude des schwingungsfähigen Gebildes bewirkt. Dieser unterschiedliche Effekt wird durch die räumliche Trennung der Tilgermasse von dem zu beruhigendem schwingungsfähigen Gebilde und durch die Wirkverbindung des schwingungsfähigen Gebildes mit der Tilgermasse über ein nachgiebiges bzw. elastisches Kopplungselement erreicht, die bei hydraulischen Lagern nicht anzutreffen ist.

Gemäß einer besonders vorteilhaften Ausgestaltung des Erfindungsgedankens ist vorgesehen, dass die Tilgermasse über ein stabförmiges Kopplungselement über den Ankopplungsbereich mit dem schwingungsfähigen Gebilde in Wirkverbindung steht.

Das Kopplungselement kann beispielsweise einen starren Kopplungselementkörper aufweisen, der schwenkbar an dem schwingungsfähigen Gebilde gelagert und entgegen einer Rückstellkraft in Schwingungsrichtung auslenkbar ist. Die Rückstellkraft kann durch eine geeignete Federeinrichtung erzeugt und von dem schwingenden Gebilde auf den starren Kopplungselementkörper ausgeübt werden.

Es ist ebenfalls denkbar, dass das Kopplungselement einen momentenfest an dem schwingungsfähigen Gebilde festgelegten biegeelastischen Kopplungselementkörper aufweist, dessen freies Ende entgegen einer Rückstellkraft in Schwingungsrichtung auslenkbar ist. Durch eine beispielsweise über das verwendete Material vorgegebene Elastizität des biegeelastischen Kopplungselementkörpers kann durch eine Verformung des Kopplungselementkörpers, die durch eine Schwingung des schwingungsfähigen Gebildes verursacht wird, eine der erzwungenen Verformung entgegen wirkende Rückstellkraft des Kopplungselementkörpers verursachen. Die Rückstellkraft kann durch eine geeignete Formgebung des Kopplungselementkörpers und durch zusätzlich Rückstellkomponenten oder Maßnahmen beeinflusst werden.

Gemäß einer besonders vorteilhaften Ausgestaltung des Erfindungsgedankens ist vorgesehen, dass die Rückstellkraft veränderbar ist. Die Rückstellkraft kann beispielsweise durch eine Veränderung oder Verlagerung von Versteifungselementen längs des stabförmigen Kopplungselements erfolgen. Sofern die Rückstellkraft durch eine Federeinrichtung erzeugt wird, kann die Federwirkung der Federeinrichtung und dadurch die auf das Kopplungselement ausgeübte Rückstellkraft verändert werden.

Eine besonders vorteilhafte Ausgestaltung der Tilgereinrichtung sieht vor, dass die Tilgermasse ein Fluid in einem Fluidbehälter ist, der an dem Basiselement angeordnet ist und in dem eine Verdrängereinrichtung in Schwingungsrichtung verlagerbar ist. Die Verdrängereinrichtung, die über die elastische Wirkverbindung mit dem schwingungsfähigen Gebilde verbunden ist, wird bei Schwingungen des schwingungsfähigen Gebildes innerhalb des Fluidbehälters in Schwingungsrichtung verlagert und verdrängt das in dem Fluidbehälter befindliche Fluid. Die Verdrängereinrichtung in dem Fluidbehälter wird durch die Schwingungen des schwingungsfähigen Gebildes ebenfalls zu Schwingungen angeregt, so dass Schwingungsenergie von dem schwingungsfähigen Gebilde über die Verdrängereinrichtung auf das Fluid übertragen wird, das die Tilgermasse bildet.

Um möglichst effektiv Schwingungsenergie von dem schwingenden Gebilde auf den mit dem Fluid befüllten Fluidbehälter übertragen zu können ist vorgesehen, dass der Fluidbehälter an zwei gegenüberliegenden und in Schwingungsrichtung beabstandet zueinander angeordneten Stirnseiten jeweils eine Durchlassöffnung aufweist, deren Querschnittsfläche kleiner als eine Querschnittsfläche des Fluidbehälters ist und die über einen Strömungskanal miteinander verbunden sind. Bei einer Verlagerung der Verdrängereinrichtung in dem Fluidbehälter wird das in dem Fluidbehälter befindliche Fluid durch diejenige Durchlassöffnung in den Strömungskanal gedrückt, in deren Richtung die Verdrängereinrichtung verlagert wird. Durch den Strömungskanal kann das aus diesem Bereich des Fluidbehälters verdrängte Fluid in den gegenüberliegenden Bereich des Fluidbehälters strömen, der durch die Verlagerung der Verdrängereinrichtung vergrößert und mit dem aus dem Strömungskanal zuströmenden Fluid aufgefüllt wird. Das in dem Fluidbehälter befindliche Fluid kann auf diese Weise durch die Verdrängereinrichtung in Schwingungen versetzt werden.

Die Eigenfrequenz des Fluids, das in dem Fluidbehälter und durch den Strömungskanal hin und her bewegt wird, kann durch die Abmessungen und Dimensionierung der Durchlassöffnungen und des Strömungskanals beeinflusst werden.

Es ist ebenso möglich, die drosselnde Wirkung bzw. die Dämpfung der Tilgereinrichtung durch das im Einzelfall verwendete Fluid zu beeinflussen. Geeignete Tilgerfluide sind beispielsweise Wasser, Öle, Glykol oder andere fliesfähige Substanzen. Die Eigenfrequenz hängt von der Beweglichkeit des Fluids innerhalb des Fluidbehälters und des Strömungskanals ab. Die durch den Querschnittswechsel bewirkte Veränderung der Strömungsgeschwindigkeit des Fluids bei dem Durchgang von dem Fluidbehälter durch die Einlassöffnung in den Strömungskanal hängt auch von den Stoffdaten des Fluids ab. Durch eine geeignete Wahl des Fluids können über die Eigenschaften des Fluids und insbesondere über die Viskosität des Fluids einige für die Tilgereinrichtung wichtige Eigenschaften beeinflusst werden. Die Eigenschaften der Tilgereinrichtung beeinflussen wiederum die Eigenschaften des schwingungsfähigen Gebildes, insbesondere dessen dynamischer Steifigkeit und somit dessen Anfälligkeit gegenüber von der Umgebung erregten Schwingungen des Gebildes.

Der die beiden Durchlassöffnungen verbindende Strömungskanal kann vollständig außerhalb des Fluidbehälters oder zumindest teilweise innerhalb des Fluidbehälters angeordnet sein.

Durch das Verhältnis der Querschnittsflächen des Fluidbehälters einerseits und der Durchlassöffnungen andererseits wird eine hydraulische Übersetzung bewirkt. Das tatsächlich durch die Verdrängereinrichtung verdrängte Fluidvolumen wird aufgrund des Einströmens in den engen Strömungskanal in Schwingungen versetzt, die scheinbar von einer wesentlich größeren Fluidmenge bzw. trägen Masse verursacht werden. Es sind demzufolge im Verhältnis zu konventionellen Tilgereinrichtungen ein deutlich geringes Fluidvolumen und damit einhergehend ein erheblich geringerer Raumbedarf und ein kleineres Eigengewicht der Tilgereinrichtung erforderlich.

Um eine einfache und nachträglich veränderbare Abstimmung der Tilgereinrichtung auf die tatsächlich auftretenden Schwingungen des schwingungsfähigen Gebildes zu ermöglichen ist vorgesehen, dass entlang des Strömungskanals eine Drosseleinrichtung angeordnet ist. Durch die konstruktive Ausgestaltung der Drosseleinrichtung kann die Dämpfung zusätzlich angepasst werden.

Es ist ebenfalls möglich, dass der Fluidbehälter zwei Fluidkammern aufweist, die über einen Strömungskanal miteinander verbunden sind. Die beiden Fluidkammern sind zweckmäßigerweise in der Schwingungsrichtung beabstandet zueinander angeordnet und über den Strömungskanal miteinander verbunden. Das in dem Fluidbehälter befindliche Fluid kann als Tilgermasse zwischen den beiden Fluidkammern hin- und herverlagert werden und dabei Schwingungsenergie des schwingungsfähigen Gebildes tilgen.

Der Strömungskanal kann zusätzlich als Drosseleinrichtung dienen. Der Strömungskanal kann eine Querschnittsfläche aufweisen, die kleiner als eine Querschnittfläche der Fluidkammern in den Mündungsbereichen des Strömungskanals ist. Durch eine geeignete Vorgabe der Querschnittsfläche des Strömungskanals in Abhängigkeit von den Querschnittsflächen der Fluidkammern kann eine hydraulische Übersetzung bewirkt und damit erreicht werden, dass die tatsächlich verlagerte Fluidmasse eine große Tilgungswirkung erzeugt, die vergleichbar mit der Tilgungswirkung von einer wesentlich größeren, jedoch nicht hydraulisch übersetzten Tilgermasse ist.

Die unterschiedlichen Querschnittsflächen des Strömungskanals und der Mündungsbereiche der Fluidkammern bewirken nicht nur eine hydraulische Übersetzung, sondern gleichzeitig auch eine Dämpfung der in Schwingungsrichtung verlagerten Tilgermasse, so dass für den jeweiligen Anwendungsfall geeignete Werte für die Dämpfungswirkung und die nicht unabhängig davon wählbare hydraulische Übersetzung ermittelt und vorgegeben werden sollte.

Die erfindungsgemäße Tilgereinrichtung kann vorteilhaft zur Tilgung von Schwingungen bei Gebäuden eingesetzt werden. So können beispielsweise durch Wind oder Erdstöße verursachte Schwingungen eines Hochhauses oder einer Brücke in vorteilhafter Weise getilgt werden. In diesem Fall ist vorgesehen, dass das Gebäude eine Tilgereinrichtung gemäß den vorangehend beschriebenen Merkmalen und Eigenschaften aufweist, wobei das Basiselement ein Gebäudefundament und ein umgebender Untergrund ist und das Gebäude das schwingungsfähige Gebilde ist. Die Tilgermasse ist an dem Basiselement und damit an dem Gebäudefundament oder an dem umgebenden Untergrund gelagert und abgestützt, so dass die Tilgermasse nicht an dem Gebäude selbst gelagert werden muss und dadurch die von einem Gebäudetragwerk aufzunehmende Masse vergrößert.

Es ist ebenfalls denkbar, dass die erfindungsgemäße Tilgereinrichtung zur Tilgung von Schwingungen einer mobilen oder stationären Tragwerksstruktur wie beispielsweise eines Maschinenfundaments relativ zu einem Untergrund verwendet wird. Die mobile oder stationäre Tragwerksstruktur bildet dabei das schwingungsfähige Gebilde und der Untergrund bildet das Basiselement, gegenüber dem die mobile oder stationäre Tragwerksstruktur wie beispielsweise das Maschinenfundament eine vergleichsweise hochfrequente Schwingung ausführt.

Ein weiteres Einsatzgebiet für die erfindungsgemäße Tilgereinrichtung ist beispielsweise die Schwingungstilgung eines Fahrzeugs. Zu diesem Zweck kann ein Fahrzeug eine Tilgereinrichtung mit den vorangehend beschriebenen Merkmalen und Eigenschaften aufweisen, wobei beispielsweise ein federnd gelagertes Rad das schwingungsfähige Gebilde ist und das Fahrzeugchassis das Basiselement ist, an dem ein Fluidbehälter mit einem Fluid als Tilgermasse gelagert ist. Das Fahrzeugchassis stellt dabei ein quasistationäres Basiselement dar, dessen Bewegungen sich auch während der Fahrt deutlich von den Schwingungen des schwingungsfähigen Gebildes, also des Rads unterscheiden. Üblicherweise führt das Fahrzeugchassis während der Fahrt gedämpfte Schwingungen mit einer vergleichsweise kleinen Frequenz und langen Schwingungsdauer auf, die deutlich kleiner als die im Vergleich dazu große Schwingungsfrequenz eines federnd gelagerten Rades ist, das über einen unebenen Untergrund abrollt. Das Fahrzeugchassis kann mit den üblicherweise kleinen Schwingungsfrequenzen als näherungsweise statisches Bezugssystem für die relativ dazu von dem Rad durchgeführten und vergleichsweise hochfrequenten Schwingungen angesehen werden.

Um nur einen kleinen Bauraum für die Tilgereinrichtung eines Rads zu benötigen, ist gemäß einer Ausgestaltung des Erfindungsgedankens vorgesehen, dass der Fluidbehälter an oder in einer Dämpfereinrichtung angeordnet ist, mit der Schwingungsbewegungen des federnd gelagerten Rads gedämpft werden. Die Dämpfereinrichtung weist dabei ein erstes und relativ zu dem Fahrzeugchassis festgelegtes Dämpferelement und ein zweites Dämpferelement auf, welches relativ zu dem ersten Dämpferelement verlagerbar ist und über eine dämpfende Wirkverbindung mit dem ersten Dämpferelement verbunden ist. Die Tilgermasse ist an dem ersten Dämpferelement und damit an dem Fahrzeugchassis gelagert. Dadurch wird im Gegensatz zu den aus der Praxis bekannten Tilgereinrichtungen die Masse des schwingungsfähigen Gebildes nicht wesentlich vergrößert, dessen Schwingungen durch die Tilgereinrichtung getilgt werden sollen.

Die Schwingungen eines federnd gelagerten Rades eines modernen Kraftfahrzeugs werden üblicherweise über eine Dämpfereinrichtung gedämpft, so dass eine Dämpfereinrichtung bereits vorgesehen und der hierfür erforderliche Bauraum in dem Kraftfahrzeug zur Verfügung steht. Durch die Anordnung der Tilgereinrichtung an oder in der Dämpfereinrichtung kann der verfügbare Bauraum genutzt und ein Einsatz oder eine Nachrüstung der Tilgereinrichtung in bereits serienreifen Kraftfahrzeugen ohne zusätzlichen Konstruktionsaufwand ermöglicht werden.

Vorzugsweise ist vorgesehen, dass der Fluidbehälter konzentrisch um eine Kolbenstange eines Axialdämpfers der Dämpfereinrichtung angeordnet ist. Durch diese konzentrische Anordnung der Tilgermasse wird keine auf den Axialdämpfer einwirkende und unerwünschte Querkraft erzeugt und gleichzeitig der zur Verfügung stehende Bauraum für die Tilgereinrichtung vorteilhaft ausgenutzt, um eine möglichst große Tilgermasse an der Dämpfereinrichtung anordnen zu können.

Gemäß einer besonders vorteilhaften Ausgestaltung des Erfindungsgedankens ist vorgesehen, dass der Fluidbehälter innerhalb eines Hohlraums einer Kolbenstange eines Axialdämpfers der Dämpfereinrichtung angeordnet ist. Auf diese Weise wird kein zusätzlicher Bauraum benötigt. Durch die Verwendung geeigneter Materialien kann einerseits ein ausreichend großer Hohlraum für die Tilgereinrichtung und insbesondere die erforderliche Tilgermasse in der Kolbenstange zur Verfügung gestellt werden und andererseits eine ausreichende Festigkeit und mechanische Belastbarkeit der Dämpfereinrichtung gewährleistet werden.

Nachfolgend werden Ausführungsbeispiele des Erfindungsgedankens näher erläutert, die in der Zeichnung dargestellt sind. Es zeigt:
Fig. 1 eine schematische Darstellung einer Tilgereinrichtung mit einem Fluidbehälter, die in einem Bauwerk angeordnet ist,
Fig. 2 eine perspektivische Ansicht einer beispielhaften Ausführung einer Tilgereinrichtung mit einem Fluidbehälter,
Fig. 3 eine Schnittansicht der in Fig. 2 dargestellten Tilgereinrichtung längs der Linie III-III in Fig. 2,
Fig. 4 und 4a eine schematische Prinzipdarstellung der Anordnung einer Tilgereinrichtung an einer Dämpfereinrichtung für ein schwingungsfähiges Gebilde, beispielsweise einer Dämpfereinrichtung für ein federnd gelagertes Rad eines Fahrzeugs, sowie eine vergrößerte schematische Darstellung der an der Dämpfereinrichtung angeordneten Tilgereinrichtung,
Fig. 5 und 5a eine schematische Darstellung einer ersten Ausgestaltung eines Fahrzeugs mit einer Tilgereinrichtung an einer Dämpfereinrichtung für ein federnd gelagertes Rad, wobei ein Fluidbehälter einer Tilgereinrichtung konzentrisch um einen Dämpferkolben eines Axialdämpfers und oberhalb eines Dämpferzylinders angeordnet ist,
Fig. 6 und 6a eine schematische Darstellung einer zweiten Ausgestaltung eines Fahrzeugs mit einer Tilgereinrichtung an der Dämpfereinrichtung eines federnd gelagerten Rades, wobei ein Fluidbehälter konzentrisch um einen Dämpferzylinder eines Axialdämpfers angeordnet ist, und
Fig. 7 und 7a eine schematische Darstellung einer dritten Ausgestaltung eines Fahrzeugs mit einer Tilgereinrichtung an der Dämpfereinrichtung eines federnd gelagerten Rades, wobei ein Fluidbehälter in einer Kolbenstange eines Dämpferkolbens eines Axialdämpfers angeordnet ist.

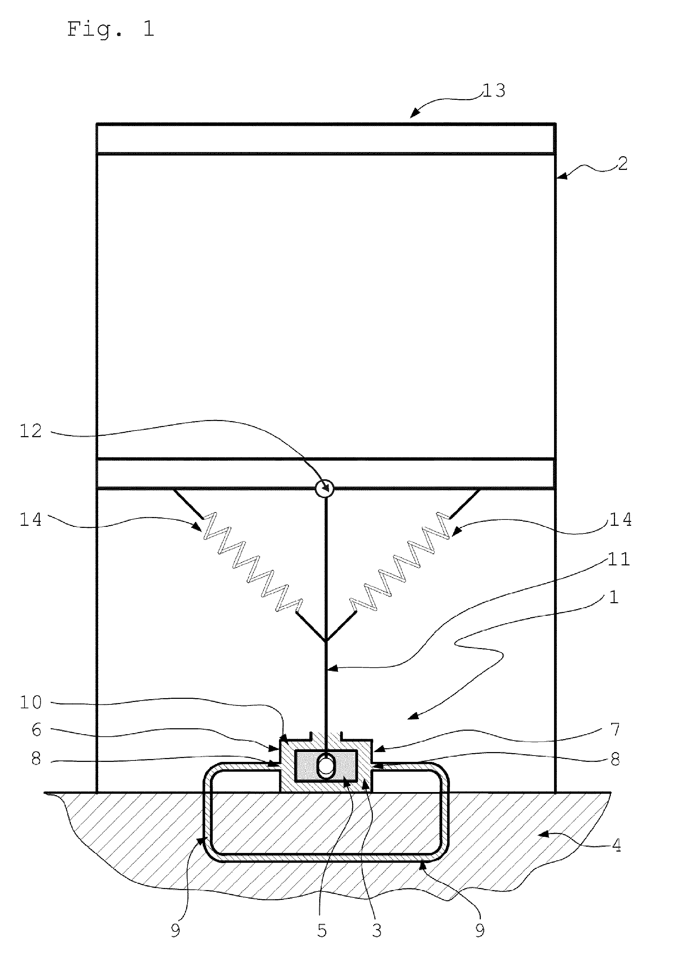

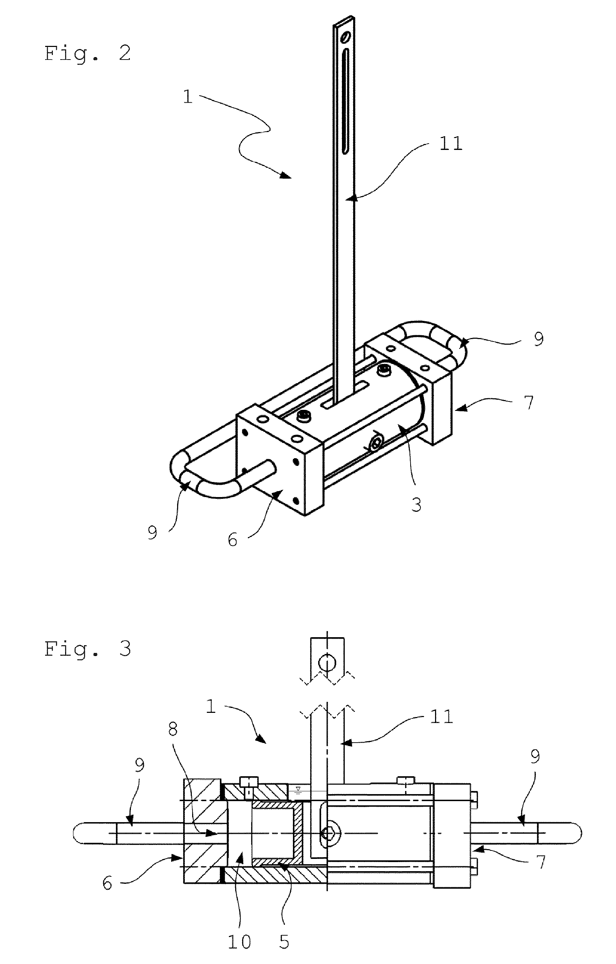

In den Figuren 1 bis 3 ist schematisch eine erfindungsgemäße Tilgereinrichtung 1 dargestellt, die in einem mehrgeschossigen Bauwerk 2 angeordnet ist. Die Tilgereinrichtung 1 weist einen Fluidbehälter 3 auf, der auf einem Untergrund 4 angeordnet ist. Der Untergrund 4 wird als quasistatisches Basiselement angesehen, während das Bauwerk 2 ein schwingungsfähiges Gebilde darstellt und beispielsweise durch horizontale Windbelastung in Schwingungen versetzt werden kann. In den Figuren 2 und 3 ist zur Veranschaulichung ausschließlich die Tilgereinrichtung 1 ohne Bauwerk 2 und Untergrund 4 abgebildet.

In dem Fluidbehälter 3 ist eine kolbenförmige Verdrängereinrichtung 5 angeordnet, die linear zwischen gegenüberliegenden Stirnseiten 6, 7 verlagert werden kann. Die beiden Stirnseiten 6, 7 weisen jeweils eine Durchlassöffnung 8 auf. Die Querschnittsfläche der Durchlassöffnung 8 ist kleiner als eine Querschnittsfläche des Fluidbehälters 3. Die beiden Durchlassöffnungen 8 sind über einen Strömungskanal 9 miteinander verbunden. Der Strömungskanal 9 verläuft außerhalb des Fluidbehälters 3. Durch eine Verlagerung der Verdrängereinrichtung 5 in Richtung einer der beiden Durchlassöffnungen 8 wird eine entsprechende Menge eines Fluids 10, das sich in dem Fluidbehälter 3 und in dem Strömungskanal 9 befindet, aus dem Fluidbehälter 3 in den Strömungskanal 9 gedrückt und strömt durch den Strömungskanal 9 und die gegenüberliegende Durchlassöffnung 8 hindurch in einen frei werdenden Bereich des Fluidbehälters 3, der durch die Verlagerung der Verdrängungseinrichtung 5 in dem Fluidbehälter 3 größer wird. Wenn die Verdrängereinrichtung 5 in entgegengesetzter Richtung zurückverlagert wird, wird ein entsprechendes Fluidvolumen erneut durch den Strömungskanal 9 hindurch in den gegenüberliegenden und dann wieder größer werdenden Bereich des Fluidbehälters 3 zurückgedrückt.

Das Fluid 10, das durch die Verdrängereinrichtung 5 in dem Fluidbehälter 3 und dem Strömungskanal 9 verlagert werden kann, bildet die Tilgermasse, die in Schwingungen versetzt werden kann.

Die Verdrängereinrichtung 5 ist über ein stabförmiges Kopplungselement 11 in einem Ankopplungsbereich 12 mit dem Bauwerk 2 verbunden. Der Ankopplungsbereich 12 befindet sich in einem Abstand zu dem Untergrund 4. Der Ankopplungsbereich 12 muss jedoch nicht im Bereich des Maximums eines Schwingungsbauchs des schwingungsfähigen Gebildes angeordnet sein, also nicht notwendigerweise in einem oberen Bereich 13 des Bauwerks 2, darf allerdings auch nicht im Bereich eines Knotens der zu betilgenden Schwingungsmode des schwingungsfähigen Gebildes angekoppelt sein.

Das stabförmige Kopplungselement 11 ist schwenkbar an dem Bauwerk 2 gelagert und über seitlich angreifende Federn 14 mit dem Bauwerk 2 verbunden. Die seitlich angreifenden Federn 14 bilden ein Rückstellmoment, das einer seitlich auslenkenden Schwenkbewegung des stabförmigen Kopplungselements 11 entgegenwirkt.

Wenn das Bauwerk 2 in Schwingungen versetzt wird und diese Schwingungen über das stabförmige Kopplungselement 11 auf die Verdrängereinrichtung 5 übertragen werden, wird Schwingungsenergie von dem Bauwerk 2 auf das ebenfalls in Schwingungen versetzte Fluid 10 übertragen, so dass die Schwingungen des Bauwerks 2 reduziert werden.

Es ist grundsätzlich möglich, einen Teil der auf die Tilgereinrichtung 1 übertragenen Schwingungsenergie durch dissipative Komponenten wie beispielsweise in dem Strömungskanal 9 angeordnete Drosseleinrichtungen oder Verwirbelungseinrichtungen in andere Energieformen zu überführen und dadurch eine zusätzliche Dämpfung der Schwingungen zu bewirken.

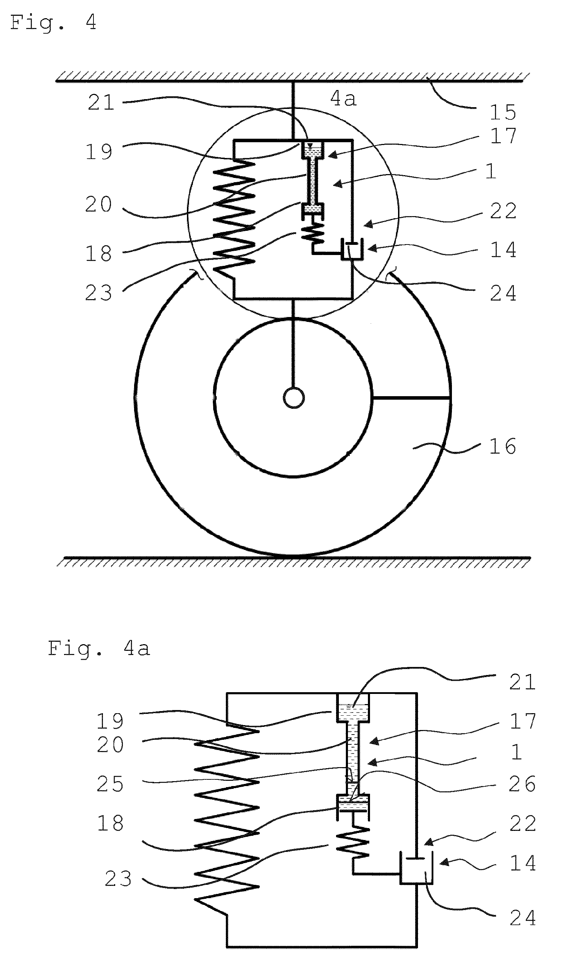

Bei der in Fig. 4 exemplarisch und schematisch dargestellten Prinzipskizze ist die Tilgereinrichtung 1 an einer Dämpfereinrichtung 14 eines an einem Fahrzeugchassis 15 federnd gelagerten Rades 16 angeordnet. In Fig. 4a sind die Tilgereinrichtung 1 und die Dämpfereinrichtung 14 in vergrößerter Darstellung hervorgehoben abgebildet. Ein Fluidbehälter 17 weist eine erste Fluidkammer 18 und eine zweite Fluidkammer 19 auf, die über einen Strömungskanal 20 miteinander verbunden sind. In den Fluidkammern 18, 19 und dem Strömungskanal 20 ist ein Fluid 21 als Tilgermasse angeordnet, die in einer durch einen Axialdämpfer 22 der Dämpfereinrichtung 14 vorgegebenen Axialrichtung zwischen den beiden Fluidkammern 18 und 19 hin und her verlagerbar ist. Die beiden Fluidkammern 18 und 19 sowie der Strömungskanal 20 sind an dem Fahrzeugchassis 15 gelagert, so dass die Masse des schwingungsfähigen Gebildes bzw. des Rades 16 nur unwesentlich durch das Fluid 21, bzw. durch die Tilgermasse vergrößert wird.

Ein an dem Rad 16 abgestütztes Federelement 23 bewirkt eine elastische Wirkverbindung zwischen einerseits dem Fluid 21 der Tilgereinrichtung 1 in den Fluidkammern 18 und 19 sowie andererseits dem Rad 16, bzw. einem starr mit dem Rad 16 verbundenen Dämpferzylinder 24 des Axialdämpfers 22.

Über ein Verhältnis einer Querschnittsfläche 25 des Strömungskanals 20 zu in Fig. 4 gleichgroß dargestellten Querschnittsflächen 26 der Fluidkammern 18 und 19 in einem Mündungsbereich des Strömungskanals 20 kann eine vorteilhafte hydraulische Übersetzung des zwischen den Fluidkammern 18 und 19 hin- und herverlagerten Fluids 21 bei dem Durchströmen des Strömungskanals 20 bewirkt werden.

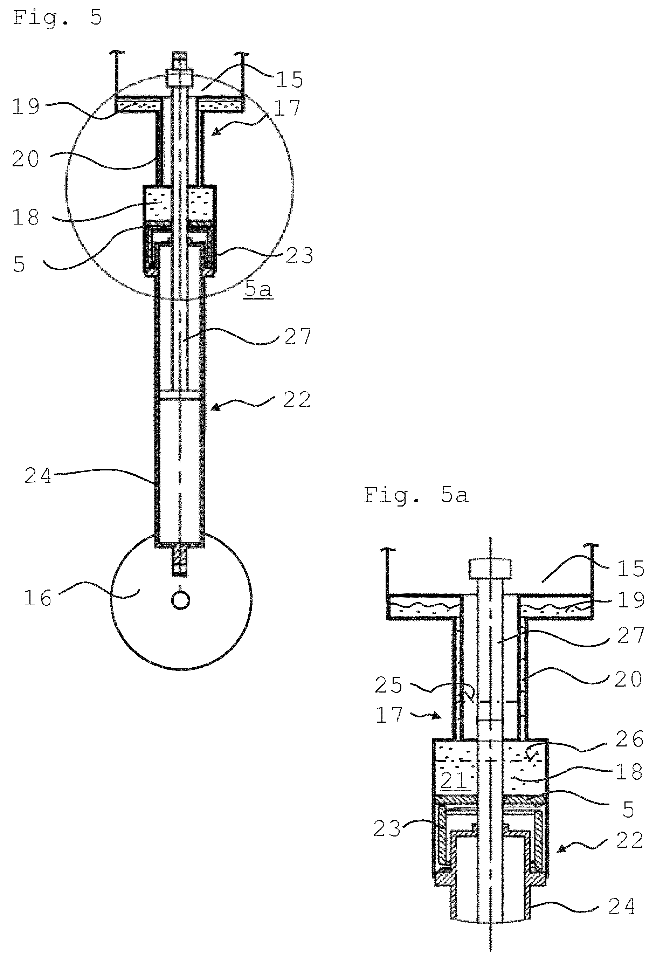

In den Fig. 5 bis 7a sind exemplarisch verschiedene konstruktive Ausgestaltungen der in Fig. 4 schematisch dargestellten Tilgereinrichtung 1 an der Dämpfereinrichtung 14 des Rades 16 eines Kraftfahrzeugs abgebildet.

Bei der in Fig. 5 sowie vergrößert in Fig. 5a dargestellten Ausgestaltung ist die erste Fluidkammer 18 unmittelbar oberhalb des Dämpferzylinders 24 des Axialdämpfers 22 angeordnet und weist eine deutlich größere Querschnittsfläche 26 quer zur Richtung einer in dem Dämpferzylinder 24 gedämpft axial verlagerbaren Kolbenstange 27 auf. Der Strömungskanal 20 umgibt konzentrisch die Kolbenstange 27 und führt zu der zweiten Fluidkammer 19, die an einem dem Dämpferzylinder 24 abgewandten Ende der Kolbenstange 27 angeordnet und mit dem Fahrzeugchassis 15 verbunden ist. Die beiden Fluidkammern 18 und 19 sowie der Strömungskanal 20 sind starr an dem Fahrzeugchassis 15 festgelegt. In den beiden Fluidkammern 18 und 19 und in dem Strömungskanal 20 befindet sich das Fluid 21. An dem Dämpferzylinder 24 ist über das als Schraubenfeder ausgebildete Federelement 23 elastisch die als Fluidkolben ausgebildete Verdrängereinrichtung 5 gelagert. Bei jeder Auslenkung des starr mit dem Rad 16 verbundenen Dämpferzylinders 24 relativ zu der starr mit dem Fahrzeugchassis 15 verbundenen Kolbenstange 27 wird die Verdrängereinrichtung 5 über das Federelement 23 elastisch in der Fluidkammer 18 verlagert und verdrängt einen Anteil des darin befindlichen Fluids 21 durch den Strömungskanal 20 in die darüber angeordnete Fluidkammer 19. Durch das in Schwingungsrichtung des Rads 16 und des Axialdämpfers 22 ebenfalls zu Schwingungen angeregte Fluid wird eine Tilgung der Schwingung des Rads 16 bewirkt.

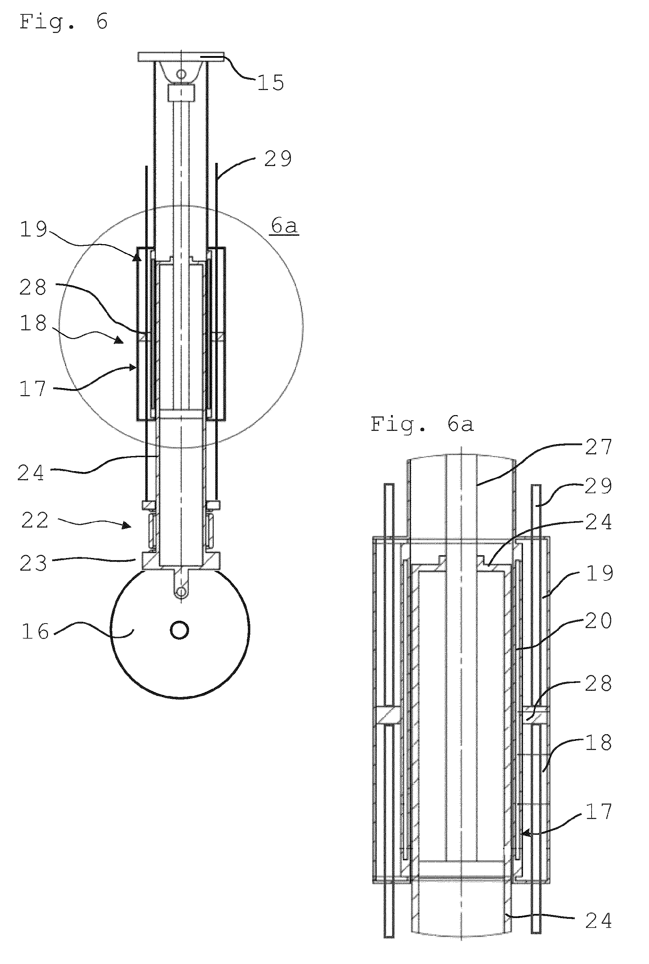

Bei dem in Fig. 6 sowie vergrößert in Fig. 6a dargestellten Ausführungsbeispiel ist der Fluidbehälter 17 konzentrisch um den relativ zu dem Fluidbehälter 17 axial verlagerbaren Dämpferzylinder 24 angeordnet und starr an dem Fahrzeugchassis 15 festgelegt. Durch einen in dem Fluidbehälter 16 in axialer Richtung verlagerbaren Ringkolben 28 ist der Fluidbehälter 16 in die zwei Fluidkammern 18 und 19 unterteilt, wobei die beiden Fluidkammern 18 und 19 über den ebenfalls konzentrisch zu dem Dämpferzylinder 24 angeordneten ringfömigen Strömungskanal 20 zu einem geschlossenen System verbunden sind. Der Ringkolben 28 ist über Führungsstangen 29, die an dem Federelement 23 abgestützt sind, mit dem Dämpferzylinder 24 und dem Rad 16 verbunden. Durch eine Schwingung des Rads 16 und des starr damit verbundenen Dämpferzylinders 24 wird der Ringkolben 28 in axialer Richtung verlagert und verlagert eine Fluidmenge zwischen den beiden Fluidkammern 18 und 19, bzw. versetzt das Fluid 21 in Bewegung. Bei dieser Ausgestaltung wird die Raderhebungskurve des Rads 16 durch die Tilgereinrichtung 1 nicht beeinträchtigt.

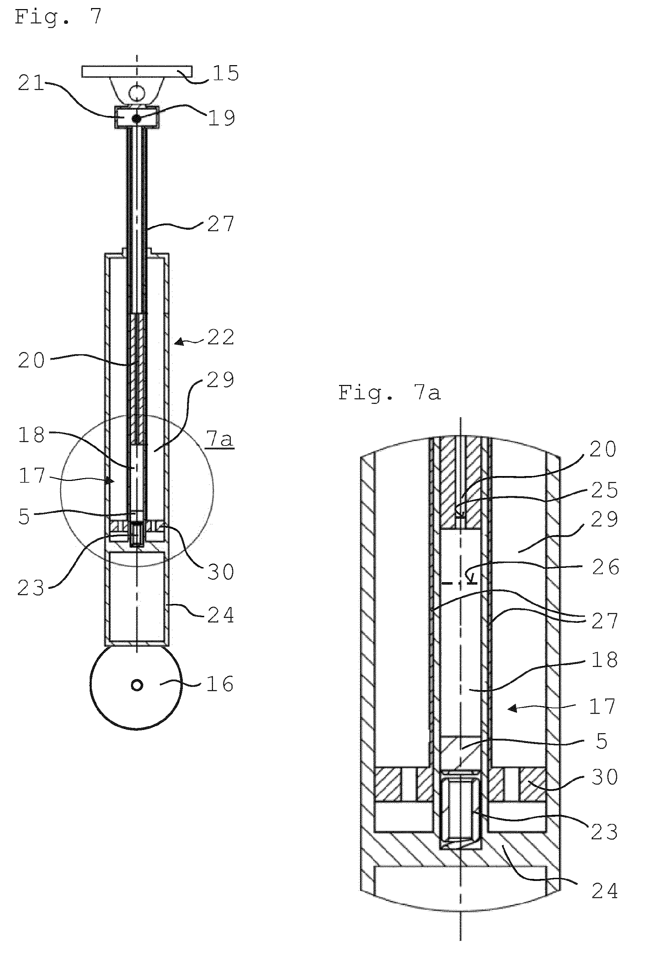

Bei dem in Fig. 7 sowie vergrößert in Fig. 7a exemplarisch dargestellten Ausführungsbeispiel sind die beiden Fluidkammern 18 und 19 übereinander in der hohl ausgestalteten Kolbenstange 27 angeordnet und über den mit einer erheblich kleineren Querschnittsfläche 25 ausgestalteten Strömungskanal 20 miteinander verbunden. Die als Fluidkolben ausgestaltete Verdrängereinrichtung 5 ist ebenfalls in der Kolbenstange 27 angeordnet und über das Federelement 23 an dem Dämpferzylinder 24 abgestützt. Die rohrförmige Kolbenstange 27 trennt das Fluid 21 und damit die Tilgermasse von einem in dem Dämpferzylinder 24 befindlichen Dämpferfluid 29, das bei einer Verlagerung des Dämpferzylinders 24 relativ zu der Kolbenstange 27 durch einen Dämpferkolben 30 in dem Dämpferzylinder 24 verlagert wird und eine Dämpfungswirkung erzeugt.

Durch die kleine Querschnittsfläche 25 des Strömungskanals 20, die deutlich kleiner als die Querschnittsflächen 26 der auf beiden Seiten angrenzenden Fluidkammern 18 und 19 ist, wird eine hydraulische Übersetzung des Fluids 21 und damit der Tilgermasse und gleichzeitig eine zusätzliche Dämpfungswirkung erzeugt.

## Patentansprüche

1. Tilgereinrichtung (1) für ein schwingungsfähiges Gebilde, das mit einem quasistatischen Basiselement verbunden ist, wobei eine Tilgermasse an einem Ankopplungsbereich (12) des Gebildes beabstandet von dem Basiselement elastisch mit dem schwingungsfähigen Gebilde in Wirkverbindung steht, **dadurch gekennzeichnet, dass** die Tilgermasse an dem Basiselement in einer Schwingungsrichtung verlagerbar gelagert ist.

2. Tilgereinrichtung (1) nach Anspruch 1, **dadurch gekennzeichnet, dass** die Tilgermasse über ein stabförmiges Kopplungselement (11) über den Ankopplungsbereichen (12) mit dem Gebilde in Wirkverbindung steht.

3. Tilgereinrichtung (1) nach Anspruch 2, **dadurch gekennzeichnet, dass** das Kopplungselement (11) einen starren Kopplungselementkörper aufweist, der schwenkbar an dem Gebilde gelagert und entgegen einer Rückstellkraft in Schwingungsrichtung auslenkbar ist.

4. Tilgereinrichtung (1) nach Anspruch 3, **dadurch gekennzeichnet, dass** Kopplungselement (11) eine momentenfest an dem Gebilde festgelegten biegeelastischen Kopplungselementkörper aufweist, dessen freies Ende entgegen Rückstellkraft in Schwingungsrichtung auslenkbar ist.

5. Tilgereinrichtung (1) nach Anspruch 3 oder Anspruch 4, **dadurch gekennzeichnet, dass** die Rückstellkraft veränderbar ist.

6. Tilgereinrichtung (1) nach einem der vorangehenden Ansprüche, **dadurch gekennzeichnet, dass** die Tilgermasse ein Fluid (10, 21) in einem Fluidbehälter (3, 17) ist, der an dem Basiselement angeordnet ist und in dem eine Verdrängereinrichtung (5) in Schwingungsrichtung verlagerbar ist.

7. Tilgereinrichtung (1) nach Anspruch 6, **dadurch gekennzeichnet, dass** der Fluidbehälter (3) an zwei gegenüberliegenden und in Schwingungsrichtung beabstandet zueinander angeordneten Stirnseiten (6, 7) jeweils eine Durchlassöffnung (8) aufweist, deren Querschnittsfläche kleiner als eine Querschnittsfläche des Fluidbehälters (3) ist und die über einen Strömungskanal (9) miteinander verbunden sind.

8. Tilgereinrichtung (1) nach Anspruch 7, **dadurch gekennzeichnet, dass** entlang des Strömungskanals (9) eine Drosseleinrichtung angeordnet ist.

9. Tilgereinrichtung (1) nach Anspruch 6, **dadurch gekennzeichnet, dass** der Fluidbehälter (17) zwei Fluidkammern (18, 19) aufweist, die über einen Strömungskanal (20) miteinander verbunden sind.

10. Tilgereinrichtung (1) nach Anspruch 9, **dadurch gekennzeichnet, dass** der Strömungskanal (20) eine Querschnittsfläche (25) aufweist, die kleiner als eine Querschnittfläche (26) der Fluidkammern (18, 19) in den Mündungsbereichen des Strömungskanals (20) ist.

11. Gebäude mit einer Tilgereinrichtung gemäß einem der vorangehenden Ansprüche 1 bis 10, **dadurch gekennzeichnet, dass** das Basiselement ein Gebäudefundament und ein umgebender Untergrund ist und dass das Gebäude das schwingungsfähige Gebilde ist.

12. Mobile oder stationäre Tragwerksstruktur wie beispielsweise Maschinenfundament mit einer Tilgereinrichtung gemäß einem der vorangehenden Ansprüche 1 bis 10, **dadurch gekennzeichnet, dass** das Basiselement ein umgebender Untergrund ist und dass die mobile oder stationäre Tragwerksstruktur das schwingungsfähige Gebilde ist.

13. Fahrzeug mit einer Tilgereinrichtung nach einem der Ansprüche 1 bis 10, **dadurch gekennzeichnet, dass** ein federnd gelagertes Rad (16) das schwingungsfähige Gebilde ist und dass das Fahrzeugchassis (15) das Basiselement ist, an dem ein Fluidbehälter (17) mit einem Fluid (21) als Tilgermasse gelagert ist.

14. Fahrzeug mit einer Tilgereinrichtung nach Anspruch 13, **dadurch gekennzeichnet, dass** der Fluidbehälter (18) an oder in einer Dämpfereinrichtung (14) angeordnet ist, mit der Schwingungsbewegungen des federnd gelagerten Rads (16) gedämpft werden.

15. Fahrzeug mit einer Tilgereinrichtung nach Anspruch 14, **dadurch gekennzeichnet, dass** der Fluidbehälter (17) konzentrisch um eine Kolbenstange (27) eines Axialdämpfers (22) der Dämpfereinrichtung (14) angeordnet ist.

16. Fahrzeug mit einer Tilgereinrichtung nach Anspruch 14, **dadurch gekennzeichnet, dass** der Fluidbehälter (17) innerhalb eines Hohlraums einer Kolbenstange (27) eines Axialdämpfers (22) der Dämpfereinrichtung (14) angeordnet ist.
